# FASCICULE DE BREVET EUROPEEN

(11) **EP 3 277 992 B1**
(45) Date de publication et mention de la délivrance du brevet: **28.04.2021**
(21) Numéro de dépôt: 16718431.6
(22) Date de dépôt: 31.03.2016
(51) Int. Cl.: F16K 15/14, F16K 17/04, F01D 17/16, F02C 7/26, F01D 9/06

(54) **GICLEUR D'HUILE POUR TURBOMACHINE**
ÖLDÜSE FÜR TURBINENMOTOR
OIL JET FOR TURBINE ENGINE

(30) Priorité: 02.04.2015 FR 1552859
(43) Date de publication de la demande: 07.02.2018
(73) Titulaire: Safran Transmission Systems, 92700 Colombes (FR)
(72) Inventeur: BAUDUIN, Lionel, 77550 Moissy-Cramayel (FR); GUILLEMONT, Maxence, 77550 Moissy-Cramayel (FR); VIEL, Julien, 77550 Moissy-Cramayel (FR)
(74) Mandataire: Ernest Gutmann - Yves Plasseraud S.A.S.
(86) Numéro de dépôt international: PCT/FR2016/050729
(87) Numéro de publication internationale: WO 2016/156744

(56) Documents cités:
- WO-A1-2006/059080
- FR-A1- 2 950 390
- GB-A- 2 079 884
- GB-A- 2 432 406
- US-A- 2 958 376

## Description

La présente invention concerne un gicleur d'huile ainsi qu'une turbomachine équipée d'un tel gicleur d'huile.

Dans la technique connue, une turbomachine comprend une pluralité de circuits d'huile servant à lubrifier des équipements tels que des paliers de roulements ou des dentures d'engrenages ou à refroidir des équipements tels que les génératrices électriques. Les circuits d'huile comprennent ainsi des gicleurs d'huile qui alimentent les différents éléments mécaniques, ces gicleurs étant disposés le long des circuits d'huile.

Lors d'un démarrage d'une turbomachine, un certain intervalle de temps s'écoule avant que l'huile ne parvienne jusqu'aux équipements, ce qui implique que ces équipements ne sont pas lubrifiés durant cet intervalle. Cet intervalle de temps est d'autant plus grand que les circuits d'huile de lubrification sont longs et occupent un espace important.

En pratique, cet intervalle de temps correspond au temps nécessaire pour remplir intégralement le circuit d'huile. En effet, durant les phases d'arrêt d'un moteur, le circuit d'huile se vide de son huile par gravité par les orifices de sortie des gicleurs d'huile. Ainsi, tant que l'air du circuit d'huile n'a pas été éliminée, la pression d'huile dans le circuit d'huile reste à un niveau extrêmement bas ne permettant pas aux gicleurs d'huile d'alimenter convenablement les équipements.

Ainsi, cela s'avère particulièrement dommageable pour les équipements de transmissions de puissances tels que des paliers hydrodynamiques. De plus, la phase de démarrage s'avère être celle ou les couples transmis sont les plus importants.

Le document GB 2 432 406 A concerne une valve.

Le document FR 2 950 390 A1 concerne un doseur de carburant destiné à être alimenté par une pompe.

Le document US 2 958 376 A décrit un appareil de contrôle de carburant pour un moteur à combustion interne.

Le document WO 2006/059080 A1 décrit une valve pour un distributeur sous pression.

L'invention a notamment pour but d'apporter une solution simple, efficace et économique à ce problème.

A cet effet, le présent document propose un gicleur, en particulier un gicleur d'huile pour une turbomachine, comprenant un corps comportant un conduit de circulation destiné à l'écoulement d'un fluide sous pression, caractérisé en ce que, le corps comprend une première partie et une seconde partie entre lesquelles est intercalée une membrane élastiquement déformable et apte à se déformer entre une position d'obturation dans laquelle elle interdit la circulation du fluide dans le conduit et une position dans laquelle elle autorise la circulation de fluide dans le conduit, la seconde partie comprenant des moyens d'appui configurés pour exercer une force sur la membrane orientée dans un sens opposé au sens de circulation de fluide de manière à réaliser une précharge de la membrane en position d'obturation.

L'invention propose ainsi d'ajouter une membrane empêchant la circulation de fluide lorsque la pression est inférieure à une valeur prédéterminée par la précharge appliquée à la membrane grâce aux moyens d'appui. Ainsi, lorsque la turbomachine est à l'arrêt, la membrane est en position d'obturation de la circulation de fluide grâce aux moyens d'appui statiques de sorte que le fluide ne peut plus s'écouler et est ainsi maintenu dans le gicleur et les canalisations auxquelles il est raccordé. Ainsi, lors d'un démarrage de la turbomachine, il est possible d'alimenter quasi-instantanément en fluide les équipements qui en ont besoin puisque les canalisations sont remplies de fluide permettant une mise en pression de celles-ci facilitée.

Selon une autre caractéristique du présent document, les moyens d'appui comprennent un renflement convexe en appui sur une portion centrale de la membrane.

L'utilisation d'un renflement convexe permet d'avoir une zone de contact entre le renflement et la membrane qui s'effectue sans point saillant quelle que soit la force d'appui sur la membrane. Avantageusement, avec un renflement convexe, la surface d'appui augmente au fur et à mesure que l'on augmente la force d'appui.

Selon une possibilité de l'invention, le renflement convexe est relié par au moins deux bras s'étendant sensiblement transversalement à la direction d'écoulement du fluide à une paroi interne de la seconde partie de manière à définir au moins un évidement ou ajour de passage de fluide entre le renflement et la paroi interne.

Dans une réalisation pratique notamment, la membrane recouvre une extrémité aval de la première partie insérée dans une extrémité amont de la seconde partie, ladite extrémité aval de la première partie comprenant des plots en saillie vers l'aval qui sont positionnés en vis-à-vis du bord de la membrane dans une direction sensiblement perpendiculaire à la direction d'écoulement du fluide.

Les plots en saillie permettent de limiter les déplacements de la membrane élastique dans une direction perpendiculaire à l'écoulement du fluide qui conduirait à un passage de fluide en position de blocage de la circulation de fluide.

Le gicleur peut comprendre au moins trois plots régulièrement répartis sur l'extrémité aval de la première partie. Dans cette configuration, la section intérieure de passage d'huile des première et seconde parties peut être de forme circulaire et la membrane a une forme de disque.

En pratique, la membrane peut être une tôle, de préférence en acier et d'une épaisseur inférieure à 0,5 mm, de préférence entre 0,15 et 0,3 mm.

L'invention concerne également un ensemble comprenant un carter tel qu'un carter de turbomachine comportant un logement de réception d'un gicleur selon l'une des revendications précédentes, dans lequel la première partie est appliquée contre une paroi de fond du logement et des moyens de serrage sont appliqués contre la deuxième partie de manière à serrer la deuxième partie contre la première partie.

Les moyens de serrage peuvent comprendre un écrou vissé sur une face interne du logement et dont une extrémité est appliquée sur la deuxième partie.

L'invention concerne encore une turbomachine, telle qu'un turboréacteur ou un turbopropulseur, caractérisé en ce qu'il comprend au moins un gicleur du type décrit ci-dessus ou un ensemble comme mentionné précédemment.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en coupe d'un gicleur d'huile selon l'invention porté par un carter de turbomachine, seule une partie du carter étant représentée ;
- la figure 2 est une vue schématique en perspective et selon le plan de coupe A-A de la figure 1 ;
- la figure 3 est une vue schématique selon le plan de coupe A-A de la figure 1 ; et
- la figure 4 est une vue schématique selon le plan de coupe B-B de la figure 3.

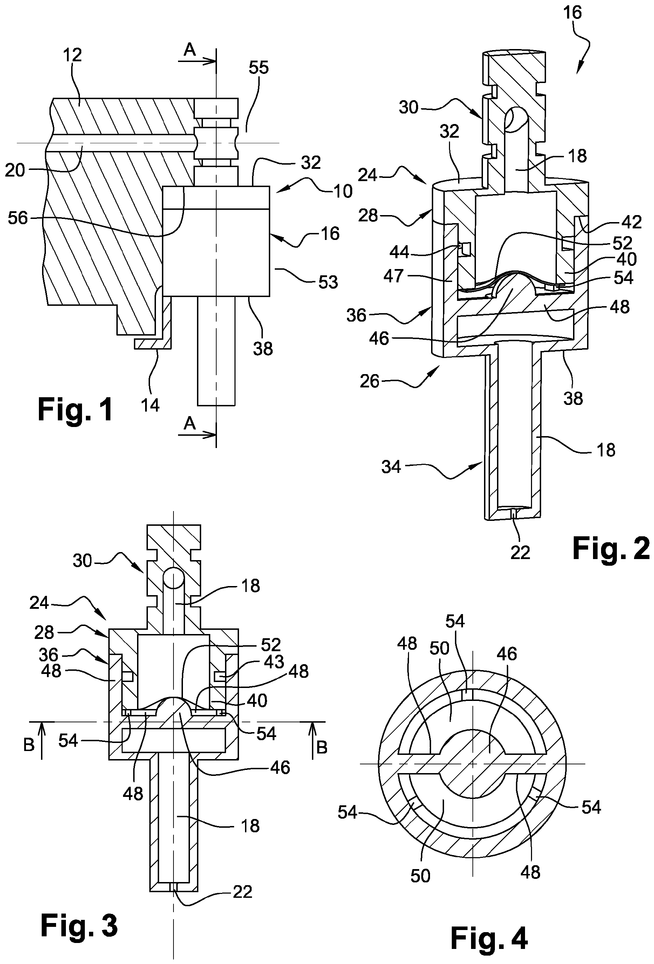

On se réfère tout d'abord à la figure 1 qui représente un gicleur d'huile 10 porté par un carter 12 d'une turbomachine au moyen d'un écrou de serrage 14. L'intérêt de l'écrou 14 de serrage en relation avec le gicleur 10 selon l'invention apparaitra de manière plus claire dans la suite de la description.

Le gicleur d'huile 10 comprend un corps tubulaire 16 logeant ainsi un conduit 18 de circulation d'huile. Le conduit 18 du gicleur communique en amont avec un canal 20 d'amené d'huile formé dans le carter 12. L'huile sort par un orifice de giclage 22 aval pour alimenter les différents éléments mécaniques qui en ont besoin (figure 2).

Le corps 16 est formé de deux parties structurellement indépendantes, une première partie 24 étant positionnée au-dessus d'une seconde partie 26. La première partie 24 et la seconde partie 26 sont prévues pour être montées fixes l'une par rapport à l'autre. Le conduit 18 s'étend ainsi au travers de la première partie 24 et de la seconde partie 26.

La première partie 24 présente une forme sensiblement tubulaire et comprend une première portion 28 d'extrémité aval et une seconde portion 30 d'extrémité amont. La première portion 28 d'extrémité aval de la première partie présente un diamètre interne et un diamètre externe supérieurs au diamètre interne et au diamètre externe de la seconde portion 30 d'extrémité amont de la première partie 24, respectivement. Un épaulement radial 32 est formé extérieurement à la jonction de la première portion 28 et de la seconde portion 30 de la première partie 24. De même, la seconde partie 26 présente une forme sensiblement tubulaire et comprend une première portion 34 d'extrémité aval et une seconde portion 36 d'extrémité amont. La première portion 34 d'extrémité aval de la seconde partie 26 présente un diamètre interne et un diamètre externe inférieurs au diamètre interne et au diamètre externe de la seconde portion 36 d'extrémité amont de la seconde partie 26, respectivement. Un épaulement radial 38 est formé extérieurement à la jonction de la première portion 34 et de la seconde portion 36 de la seconde partie 26.

La première portion 28 de la première partie 24 comprend une paroi cylindrique 40 insérée à l'intérieur dans la seconde portion 36 de la seconde partie 26. La première portion 28 de la première partie 24 comprend un épaulement radial 42 à l'extrémité amont de la paroi cylindrique contre lequel le bord libre de la seconde portion 36 de la seconde partie 26 peut venir en appui. Un joint d'étanchéité 43 est monté dans une gorge annulaire 44 externe de la paroi cylindrique 40 de la première portion 28 de la première partie 24 (figures 2 et 3)

La seconde portion 36 de la seconde partie 26 comporte une paroi cylindrique 47 engagée autour de la paroi cylindrique 40 de la première portion 28 de la première partie 24. Un renflement convexe 46 est formé à l'intérieur de la paroi cylindrique 48 de manière à ce que la surface convexe du renflement soit tournée en direction de la première partie 28.

Ce renflement convexe 46 à surface externe sensiblement hémisphérique est relié à sa base à deux bras 48 s'étendant sensiblement perpendiculairement à l'écoulement de fluide, ces bras 48 étant reliés à la surface interne de la paroi cylindrique 47 de la seconde portion 36 de la seconde partie 26 (figures 2 et 4 en particulier). Deux ajours 50 ayant chacun la forme d'un demi-anneau sont ainsi délimités par les bras 48, la base du renflement convexe et la surface interne de la paroi cylindrique 48.

Comme cela est visible sur les figures 2 et 3, une membrane 52 élastiquement déformable est intercalée entre l'extrémité libre de la paroi cylindrique 40 de la première partie 24 et le renflement convexe 46 de sorte que le renflement convexe 46 vient en appui sensiblement sur une portion centrale de la membrane 52. La membrane 52 élastique recouvre intégralement l'extrémité libre de la première portion 28 de la première partie 24. Cette extrémité libre comprend plusieurs plots 54 en saillie vers l'aval et agencés en vis-à-vis du bord de la membrane 52 dans la direction perpendiculaire à l'écoulement d'huile, de manière à limiter le déplacement de la membrane 52 en direction transversale (figures 3 et 4).

La figure 2 représente ainsi la membrane dans une position de blocage ou d'obturation de la circulation d'huile en direction de l'orifice 22 de giclage d'huile. Ainsi, on comprend que le degré d'insertion de la première partie 24 dans la deuxième partie 26 permet de contrôler le niveau de déformation de la membrane 52 et par conséquent le niveau de précharge appliqué à la membrane 52. Lorsque la pression en huile est supérieure à la précharge appliquée par le renflement convexe 46, la membrane 52 se déforme élastiquement et l'huile circule dans les ajours 50 jusqu'à l'orifice 22 de sortie du gicleur. Le renflement convexe 46 forme ainsi des moyens d'appui statiques sur la membrane.

Comme représenté en figure 1, le gicleur est monté dans une cavité du carter. Cette cavité comprend un premier logement 53 et un second logement 55 qui sont cylindriques. Le premier logement 53 présente un diamètre supérieur au second logement 55. La seconde portion 30 de la première partie 24 du gicleur est engagée dans le second logement 55. La première portion 28 de la première partie 24 du gicleur 10 et la seconde portion 36 de la seconde partie 26 du gicleur 10 sont montées dans le premier logement 53 de manière à ce que l'épaulement 32 de la première partie 24 du corps 16 du gicleur 10 vienne en contact avec un épaulement 56 du carter formé à la jonction des premier 53 et second 55 logements. Un écrou de serrage 14 est vissé sur la face interne du premier logement 53 au niveau de l'extrémité opposée au second logement 55 et vient s'appliquer sur l'épaulement 38 de la deuxième partie 26 du corps 16 du gicleur 10, afin de bloquer la seconde partie 26. En pratique, la précharge est déterminée par le dimensionnement des première 24 et seconde 26 parties du gicleur.

L'invention permet de limiter les pertes d'huile dans le circuit d'huile qui s'opèrent par gravité à l'arrêt de la turbomachine en bloquant la circulation d'huile. La mise en pression du circuit est grandement facilitée et il est ainsi possible d'alimenter rapidement en huile de lubrification les différents éléments mécaniques qui en ont besoin.

Si la description effectuée en référence aux figures concerne un renflement convexe, on comprend qu'il serait possible d'utiliser d'autres moyens d'appui pour assurer la précharge de la membrane élastiquement déformable afin d'assurer le blocage de l'écoulement d'huile à l'arrêt de la turbomachine.

Le terme « carter » désigne aussi bien un carter supportant les paliers de roulements d'un rotor basse pression ou d'un rotor haute pression de la turbomachine, qu'un carter d'un boîtier d'accessoires supportant des équipements. Un tel boîtier d'accessoires est habituellement agencé dans la nacelle de la turbomachine.

Les termes « amont » et « aval » sont utilisés ici en relation avec le sens d'écoulement du fluide dans le gicleur d'huile.

## Revendications

1. Gicleur (10), en particulier un gicleur d'huile pour une turbomachine, comprenant un corps (16) comportant un conduit de circulation (18) destiné à l'écoulement d'un fluide sous pression, tel que le corps (16) comprend une première partie (24) et une seconde partie (26) entre lesquelles est intercalée une membrane (52) élastiquement déformable et apte à se déformer entre une position d'obturation dans laquelle elle interdit la circulation du fluide dans le conduit (18) et une position dans laquelle elle autorise la circulation de fluide dans le conduit (18), la seconde partie (26) comprenant des moyens d'appui (46) configurés pour exercer une force sur la membrane (52) orientée dans un sens opposé au sens de circulation de fluide de manière à réaliser une précharge de la membrane (46) en position d'obturation, **caractérisé en ce que** lesdits moyens d'appui comprennent un renflement convexe (46) en appui sur une portion centrale de la membrane (52).

2. Gicleur selon la revendication 1, dans lequel le renflement convexe (46) est relié par au moins deux bras (48) s'étendant sensiblement transversalement à la direction d'écoulement du fluide à une paroi interne de la seconde partie (26) de manière à définir au moins un évidement (50) de passage de fluide entre le renflement (46) et la paroi interne.

3. Gicleur selon la revendication 2, dans lequel la membrane recouvre une extrémité aval de la première partie (24) insérée dans une extrémité amont de la seconde partie (26), ladite extrémité aval de la première partie comprenant des plots (54) en saillie vers l'aval qui sont positionnés en vis-à-vis du bord de la membrane (52) dans une direction sensiblement perpendiculaire à la direction d'écoulement du fluide.

4. Gicleur selon la revendication 3, dans lequel il comprend au moins trois plots (54) régulièrement répartis sur l'extrémité aval de la première partie (24).

5. Gicleur selon l'une des revendications précédentes, dans lequel la membrane (52) est une tôle, de préférence en acier et d'une épaisseur inférieure à 0,5 mm, de préférence entre 0,15 et 0,3 mm.

6. Ensemble comprenant un carter tel qu'un carter de turbomachine, comportant un logement de réception d'un gicleur (10) selon l'une des revendications précédentes, dans lequel la première partie (24) est appliquée contre une paroi de fond du logement et des moyens de serrage (14) sont appliqués contre la deuxième partie (26) de manière à serrer la deuxième partie (26) contre la première partie (24).

7. Ensemble selon la revendication 6, dans lequel les moyens de serrage comprennent un écrou (14) vissé sur une face interne du logement et dont une extrémité est appliquée sur la deuxième partie (26).

8. Turbomachine, telle qu'un turboréacteur ou un turbopropulseur, **caractérisé en ce qu'**il comprend au moins un gicleur selon l'une des revendications 1 à 5, ou un ensemble selon l'une des revendications 6 ou 7.

## Patentansprüche

1. Düse (10), insbesondere Öldüse für ein Turbotriebwerk, mit einem Düsenkörper (16), der eine Strömungsleitung (18) für die Strömung eines unter Druck stehenden Fluids aufweist, derart, dass der Körper (16) einen ersten Abschnitt (24) und einen zweiten Abschnitt (26) enthält, zwischen denen eine Membran (52) angeordnet ist, die elastisch verformbar ist und sich zwischen einer geschlossenen Position, in der sie das Strömen von Fluid in die Leitung (18) verhindert, und einer Position, in der sie das Strömen von Fluid in die Leitung (18) zulässt, verformen kann, wobei der zweite Abschnitt (26) Abstützmittel (46) enthält, die dazu ausgelegt sind, eine Kraft auf die Membran (52) auszuüben, die in einer Richtung entgegengesetzt zur Richtung der Fluidströmung ausgerichtet ist, um eine Vorspannung der Membran (46) in die geschlossene Position zu erreichen,
**dadurch gekennzeichnet, dass**
die Abstützmittel eine konvexe Ausbuchtung (46) aufweisen, die sich an einem zentralen Abschnitt der Membran (52) abstützt.

2. Düse nach Anspruch 1,
wobei die konvexe Ausbuchtung (46) über zumindest zwei Arme (48), die sich im Wesentlichen quer zur Strömungsrichtung des Fluids erstrecken, mit einer Innenwand des zweiten Abschnitts (26) verbunden ist, um zumindest eine Ausnehmung (50) für den Durchtritt von Fluid zwischen der Ausbuchtung (46) und der Innenwand zu definieren.

3. Düse nach Anspruch 2,
wobei die Membran ein stromabwärts gelegenes Ende des ersten Abschnitts (24) bedeckt, das in ein stromaufwärts gelegenes Ende des zweiten Abschnitts (26) eingesetzt ist, wobei das stromabwärts gelegene Ende des ersten Abschnitts stromabwärts vorstehende Zapfen (54) aufweist, die gegenüber dem Rand der Membran (52) in einer Richtung im Wesentlichen senkrecht zur Strömungsrichtung des Fluids angeordnet sind.

4. Düse nach Anspruch 3,
wobei sie zumindest drei Zapfen (54) enthält, die gleichmäßig über das stromabwärts gelegene Ende des ersten Abschnitts (24) verteilt sind.

5. Düse nach einem der vorstehenden Ansprüche,
wobei die Membran (52) ein Blech, vorzugsweise aus Stahl, mit einer Dicke von weniger als 0,5 mm, vorzugsweise zwischen 0,15 und 0,3 mm, ist.

6. Anordnung mit einem Gehäuse, wie etwa einem Turbotriebwerksgehäuse, enthaltend eine Aufnahme zum Aufnehmen einer Düse (10) nach einem der vorhergehenden Ansprüche,
wobei der erste Abschnitt (24) an eine Bodenwand der Aufnahme angelegt ist und Klemmmittel (14) an den zweiten Abschnitt (26) angelegt sind, um den zweiten Abschnitt (26) an den ersten Abschnitt (24) zu klemmen.

7. Anordnung nach Anspruch 6,
wobei die Klemmmittel eine Mutter (14) enthalten, die an eine Innenfläche der Aufnahme geschraubt ist und von der ein Ende an den zweiten Abschnitt (26) angelegt ist.

8. Turbotriebwerk, wie etwa Turbostrahltriebwerk oder Turboprop-Triebwerk, **dadurch gekennzeichnet, dass** es zumindest eine Düse nach einem der Ansprüche 1 bis 5 oder eine Anordnung nach einem der Ansprüche 6 oder 7 aufweist.

## Claims

1. A jet (10), in particular an oil jet for a turbine engine, comprising a body (16) including a circulation pipe (18) intended for the flow of a pressurized fluid, the body (16) comprises a first part (24) and a second part (26) between which a resiliently deformable membrane (52) is inserted, said membrane being capable of deforming between a sealed position in which it prevents the circulation of the fluid in the pipe (18) and a position in which it allows the circulation of fluid in the pipe (18), the second part (26) including bearing means (46) configured to exert a force on the membrane (52) positioned in a direction that is opposite to the circulation of fluid so as to preload the membrane (46) in sealed position, **characterised in that** said bearing means comprises a convex bulge (46) resting on a central portion of the membrane (52).

2. The jet of claim 1, wherein the convex bulge (46) is connected by at least two arms (48), extending substantially transversely to the direction of flow of the fluid, to an inner wall of the second part (26) so as to define at least one recess (50) for passage of fluid between the bulge (46) and the inner wall.

3. The jet of claim 2, wherein the membrane covers a downstream end of the first part (24) inserted into an upstream end of the second part (26), said downstream end of the first part including studs (54) projecting downstream that are positioned opposite the edge of the membrane (52) in a direction substantially perpendicular to the direction of flow of the fluid.

4. The jet of claim 3, wherein it comprises at least three studs (54) regularly distributed over the downstream end of the first part (24).

5. The jet of one of the previous claims, wherein the membrane (52) is a sheet, preferably made of steel and having a thickness of less than 0.5 mm, preferably between 0.15 and 0.3 mm.

6. An assembly comprising a casing such as a turbine engine casing, including a housing accommodating a jet (10) according to one of the previous claims, wherein the first part (24) is applied against a bottom wall of the housing and clamping means (14) are applied against the second part (26) so as to clamp the second part (26) against the first part (24).

7. The assembly of claim 6, wherein the clamping means comprise a nut (14) screwed to an inner face of the housing and one end of which is applied to the second part (26).

8. A turbine engine, such as a turbojet or a turboprop, **characterised in that** it comprises at least one jet according to one of claims 1 to 5 or an assembly according to one of claims 6 or 7.
